Europäisches Patentamt

European Patent Office

Office européen des brevets

(11) Veröffentlichungsnummer: 0 279 257
A2

# (12) EUROPÄISCHE PATENTANMELDUNG

(21) Anmeldenummer: 88101342.9

(22) Anmeldetag: 30.01.88

(51) Int. Cl.⁴: G01N 30/56

(30) Priorität: 14.02.87 DE 3704674

(43) Veröffentlichungstag der Anmeldung:
24.08.88 Patentblatt 88/34

(84) Benannte Vertragsstaaten:
AT BE CH DE ES FR GB GR IT LI LU NL SE

(71) Anmelder: CHEMO-CONSULT KLAUS
KRONWALD
Sunnisheimring 83-85
D-6920 Sinsheim(DE)

(72) Erfinder: Schürmann, Gregor
Werderstrasse 29
D-6900 Heidelberg(DE)
Erfinder: Lutter, Dieter
Adalbert-Stifter-Strasse 3
D-6903 Neckargemünd(DE)
Erfinder: Pauli, Josef
Hebelstrasse 18
D-6900 Eppelheim(DE)
Erfinder: Kronwald, Klaus
Sunnisheimring 85
D-6920 Sinsheim(DE)

(74) Vertreter: Patentanwälte Zellentin
Rubensstrasse 30
D-6700 Ludwigshafen(DE)

(54) Verfahren und Vorrichtung zum Befüllen von Chromatographiesäulen.

(57) Die vorliegende Erfindung betrifft ein Verfahren zum Befüllen von Chromatographiesäulen. Dabei wird das einzufüllende Material kopfseitig in die senkrecht stehende Säule eingetragen. Die Erfindung unterscheidet sich von herkömmlichen Verfahren dadurch, daß man das Material trocken mit Hilfe einer vertikal angeordneten Schnecke aus dem Vorratsbehälter in die Säule einbringt und diese rotiert, den Behälterinhalt durch Zufuhr von Luft oder einem Inertgas aufwirbelt, sowohl den Behälter als auch die Säule entlüftet und die Säule in kurzen Zeitabständen durch Auf-und Abbewegung auf einen unteren Anschlag stößt, wobei der Vorratsbehälter und die Schnecke ortsfest verbleibt.

EP 0 279 257 A2

## Verfahren und Vorrichtung zum Befüllen von Chromatographiesäulen

Die vorliegende Erfindung betrifft ein Verfahren und eine Vorrichtung zum Befüllen von Chromatographiesäulen.

Grundsätzlich sind zwei Verfahren bekannt Chromatographiesäulen mit dem die Chromatographieoberfläche bildenden Granulat oder Gel zu befüllen, nämlich das trockene Füllen und das Einschlämmen des Füllmaterials mit einer Flüssigkeit.

Für grobkörniges Gut beispielsweise einer Korngröße von über 100 µm genügt in der Regel ein einfaches Einschütten und Verdichten des trockenen Materials in der Säule. Da die Trennschärfe von Chromatographiesäulen jedoch mit der spezifischen Oberfläche der Schüttung - das heißt mit sinkender Korngröße - zunimmt, besteht ein großer Bedarf an mit Schüttungen gefüllten Chromatographiesäulen, bei denen der Korndurchmesser unter 50, insbesondere unter 20 µm liegt.

Diese Schüttungen sind jedoch schwer handhabbar, da beim Einfüllen des Materials zum Beispiel durch Sichtungsvorgänge Inhomogenitäten hervorgerufen werden, die einem gewünschten geraden Frontverlauf und der erforderlichen hohen Reproduzierbarkeit zuwiderlaufen, insbesondere, da die Trennoperationen unter Druck (2 - 20 bar) oder sogar Hochdruck (50 - 600 bar) durchgeführt werden müssen. Erst hierdurch werden genügend hohe theoretische Bodenzahlen erreicht.

Um die gewünschte Reproduzierbarkeit zu erreichen, wird daher in sehr aufwendiger Weise zunächst eine flüssige Aufschlämmung des Materials hergestellt und diese in einen Vorratsbehälter gebracht, der auf der zu befüllenden Säule angeordnet ist. Aus diesem läßt man die Aufschlämmung extrem langsam in die zu befüllende, ebenfalls mit Flüssigkeit gefüllte Säule absinken. So dauert beispielsweise das Befüllen einer Säule mit einem Volumen von 400 ml bis zu drei Tagen.

Es liegt auf der Hand, daß diese Vorgehensweise zeitaufwendig und kostspielig ist. Die vorliegende Erfindung hat sich daher die Aufgabe gestellt, ein Verfahren und eine Vorrichtung zu schaffen, mit denen das Befüllen von Chromatographiesäulen unter Gewährleistung sehr hoher Reproduzierbarkeit wesentlich vereinfacht, insbesondere verkürzt werden kann und auch Füllmaterial einer Teilchengröße unter 100 µm, insbesondere unter 50 µm verarbeitet werden kann.

Die Lösung dieser Aufgabe gelingt dadurch, daß man das Material trocken mit Hilfe einer vertikal angeordneten Schnecke aus dem Vorratsbehälter in die Säule einbringt und diese rotiert, das einzufüllende Material im Vorratsbehälter durch Zufuhr von Luft oder einem Inertgas aufwirbelt, sowohl den Behälter als auch die Säule entlüftet und die Säule in kurzen Zeitabständen durch Auf-und Abbewegung auf einen unteren Anschlag stößt, wobei der Vorratsbehälter und die Schnecke ortsfest verbleiben.

Derart befüllte Säulen weisen die angestrebte hohe Reproduzierbarkeit auf. Der gesamte Füllvorgang dauert bei einer 400 ml Säule lediglich ca. 30 Minuten, wobei sich zusätzlich noch der Vorteil ergibt, daß eine höhere Packungsdichte bei herabgesetztem Staudruck gegenüber der Naßfüllung erreicht wird.

Dabei kommt der Wirkungsgrad der Säulen bei Mitteldruckbetrieb dem HPLC-Verfahren (High Performance Liquid Chromatography) sehr nahe, es werden gerade Fronten beobachtet. Gesteigerte Durchflußgeschwindigkeiten setzen den Einfluß der Diffusion bedeutend herab.

Die in den Behälter eingeblasene Luft oder das Inertgas, z.B. Stickstoff, hält das dort befindliche Material nach Art einer Wirbelschicht in Fluß. Dabei gelangen auch Gasanteile über die Schnecke in die Säule, aus der sie zusammen mit durch den Eintrag verdrängten Gasvolumnia aus dem Säulenkopf abgeführt werden.

Es hat sich besonders bewährt, das einzufüllende Material aus dem Vorratsgefäß zunächst in einen Trichter zu füllen, der oberhalb der Säule angeordnet ist, wodurch eine gewisse Pufferwirkung erzielt wird. Die Abluft wird dabei seitlich der Trichtermündung beziehungsweise Trichterwandung abgeleitet.

Das Anheben und Fallenlassen der Säule zusammen mit den gegebenenfalls kopfseitig fest mit dieser verbundenen Trichter und der die Säule trangenden Unterlage geschieht vorzugsweise mit einer Frequenz von 80 bis 200 Stößen pro Minute, wobei die Hubhöhe 0,5 - 5 cm, beispielsweise ca. 2 cm, beträgt. Dabei erfolgt der Stoß mit Hilfe eines im Schwerlot angeordneten Stößels, vorzugsweise mit punktförmiger Auflage Gleichzeitig wird die Säule mit einer Rotationsgeschwindigkeit von 4 - 20 min$^{-1}$ Umdrehungen um ihre Längsachse gedreht, wodurch insbesondere Abweichungen der Säulenachse von der Senkrechten ausgeglichen werden. Grundsätzlich kann die Aufwirbelung des Inhaltes des Vorratsbehälters kontinuierlich erfolgen. Es hat sich jedoch herausgestellt, daß das Unterbrechen der Gaszufuhr vorzugsweise während der Abwärtsbewegung der Säule sich positiv auf die Qualität der Füllung auswirkt.

Besonders effektive Säulen lassen sich nach dem erfindungsgemäßen Verfahren mit Korngrößen unter 45 µm insbesondere unter 20 µm herstellen.

Die Vorrichtung zum trockenen Befüllen der Chromatographiesäulen besteht demnach aus einer

2

Halterung für die Säule und einem oberhalb der Säule angeordnetem Vorratsbehälter, der so gestaltet ist, daß die Säule am Vorratsbehälter vertikal verschieblich und drehbar gelagert ist, - daß der Vorratsbehälter Düsen für die Zufuhr von Luft oder Inertgas aufweist und mit Entgasungsöffnungen versehen ist,

- daß im Vorratsbehälter eine in dessen Ausgang hineinreichende motorisch getriebene vertikale Förderschnecke angeordnet ist,

- wobei der Ausgang entlüftbar mit dem Säulenoberteil verbunden ist,

- daß der Vorratsbehälter und die Schnecke ortsfest an einem Stativ angeordnet

- und daß die Säule mit einem Antrieb für deren Rotation und eine überlagerte intermittierende Hubbewegung verbunden und mit einem Stoßlager versehen ist.

Die drehbare und verschliebliche Lagerung der Säule am Vorratsgefäß kann grundsätzlich über einen am Ausgang des Vorratsbehälters angeordneten Stutzen erfolgen, der zum Beispiel ausreichend lang in die Säule hineinragt und für die Entlüftung doppelwandig gestaltet ist. Vorgezogen wird jedoch die Befestigung eines entlüftbaren Trichters auf der Säule, der oben geschlossen den Ausgang des Vorratsbehälters oder gegebenenfalls auch diesen selbst mit Gleitsitz umgreift.

Eine besonders einfache und zuverlässige Ausführungsform der Vorrichtung besteht darin, daß die Säule und mit ihr der Trichter an einer Tragekonstruktion in Form von Traversen gehalten sind, die ihrerseits verwindungsstabil auf senkrecht angeordneten Schienen geführt sind.

Eine zuverlässige und einfache Art des Antriebs der Säule gelingt durch Haltern der Säule auf einem koaxial angeordneten Zahnrad mit Schneckentrieb, der über eine gelenkige, längenveränderliche (Kardan) Welle mit einem ortsfesten Motor verbunden ist, der gleichzeitig einen unterhalb des Zahnrades befindlichen Exzenter treibt, um die Hubbewegung zu bewirken. Dieser Exzenter kann die Säule für die Abwärtsbewegung freigeben, so daß diese unter Erdbeschleunigung erfolgt.

Der Stoß, und der dadurch in der Schüttung bewirkte Impuls läßt sich jedoch durch eine Kinematik steigern, bei der die Abwärtsbewegung zwangsweise über den Exzenter erfolgt, wobei dieser ständig mit der Zahnscheibe in Eingriff bleibt. Das Auftreffen auf die Unterlage kann auch ersetzt sein durch Zwangsführung und durch relativ hohe Beschleunigung des Behälterinhaltes im unteren Umkehrpunkt.

Bei den vorerwähnten Stoßvorgängen besteht die Gefahr der Ausbildung von sogenannten Schallmustern. Diese können sicher durch die Verwendung eines Kunststoffblocks als Stoßlager und Montage der Vorrichtung auf einer Weichgummiunterlage wie zum Beispiel Moosgummi sicher vermieden werden.

Letzlich wird vorgeschlagen, die Düsen für die Begasung des Vorratsgefäßes synchron mit der Hubbewegung der Säule anzusteuern.

Anhand der beiliegenden Figuren wird die vorliegende Erfindung näher erläutert.

Figur 1 zeigt eine Prinzipskizze des Füllungsteiles.

Figur 2 zeigt den Gesamtaufbau der Vorrichtung.

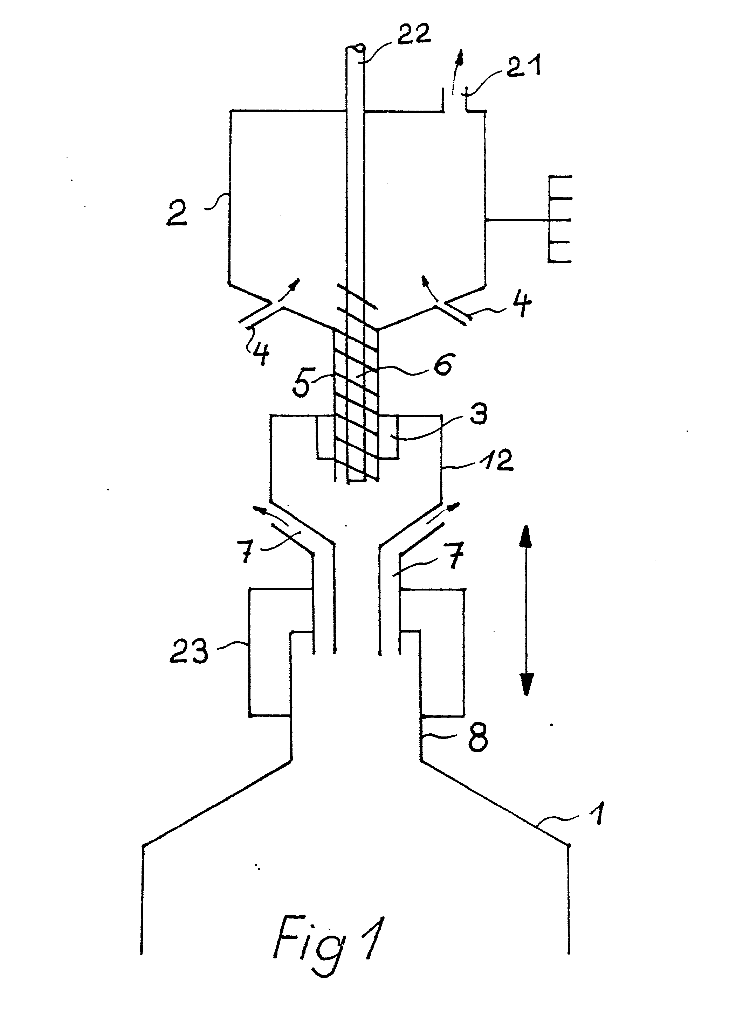

Figur 1: Oberhalb der Säule 1 ist ein Vorratsbehälter 2 angeordnet, in dessen Ausgang 5, der hier die Form eines Rohrstutzens hat eine Förderschnecke 6 hineinragt, deren Welle lotrecht ausgerichtet und die nach oben aus dem Vorratsbehälter 2 zur Verhinderung mit einem (nicht dargestellten) Antriebsmotor herausgeführt ist. Am Rohrstutzen des Ausgangs 5 ist ein Trichter 12 mit Hilfe einer Gleitringdichtung 3 gleitend und drehbar gelagert. Der Trichter selbst ist mit Hilfe einer Verschraubung 23 mit dem Oberteil 8 der Säule 1 fest verbunden. Dabei ist der Trichter koaxial doppelwandig ausgeführt und besitzt Entlüftungen für die aus der Säule verdrängte und durch die Schnecke 6 über die Düsen 4 in den Vorratsbehälter gelangende Luft. Die Düsen sind sternförmig um den Vorratsbehälterausgang 5 angeordnet. Über sie wird soviel Gas zugeführt und aus der Entlüftung 21 abgegeben, daß der Behälterinhalt fluidisiert wird.

Der Vorratsbehälter 2 ist ortsfest an einem Stativ eingespannt, wohingegen die Säule 1 und mit ihr der Trichter 12 drehbar und auf-und abbeweglich gelagert sind.

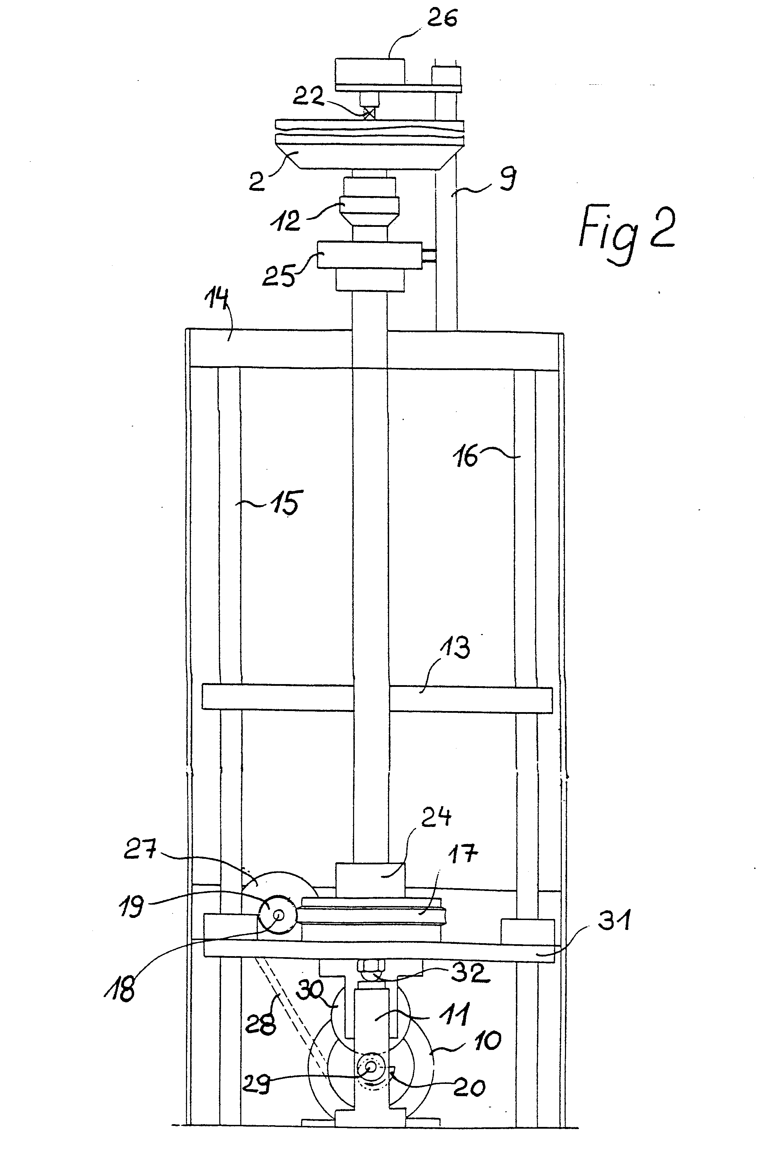

Figur 2 zeigt die Säule 1, die von Traversen 14 und 13 gehalten und in einem Lager 24 auf einer Zahnradscheibe 17 drehbar montiert ist. Die Traversen gleiten an Schienen 15, 16, oder bilden ein Gleitlager für die Säule und sind starr mit den Schienen 15, 16, verbunden und stellen gleichzeitig für die Säule 1 ein Drehlager dar.

Auf der Säule 1 ist der Trichter 12 angeordnet und fest mit diesem verbunden (verschraubt). Die Säule kann dabei in einem zusätzlichen Lager 25 geführt sein, das an einem ortsfesten Stativ 9 gehalten ist.

Ebenfalls mit diesem Stativ verbunden befindet sich oberhalb des Trichters 12 der Vorratsbehälter 2, aus dem nach oben die Schneckenwelle 22 herausragt, die durch einen eigenen Motor 26 angetrieben ist. Die Zahnscheibe 17 wird von einer Schnecke 19 in Drehung versetzt, die über eine gelenkige und wegen der mit der erforderlichen Hubbewegung verbundenen Längenänderung längenveränderliche Welle 18 mit einer ortsfesten Keilriemenscheibe in Eingriff steht, die über den Keilriemen 28 von dem Motor 10 angetrieben wird. Auf der Motorwelle 29 ist ein Exzenter 20 befestigt, der über ein Zwischenstück 30 eine in den Schienen 15, 16, geführte Plattform 31 anhebt und nach Erreichen des oberen Totpunktes freigibt.

Koaxial zur Säule 1 und zur Zahnscheibe 17, die auf der Plattform 31 drehbar gelagert ist, befindet sich unter der Plattform 31 ein mit dieser verbundener Stößel, der beim Fall der Säule 1 auf den Kunststoffblock 11 schlägt. Dieser ist zum Block hin abgerundet, so daß der punktförmig auf den Block auftrifft.

Mit dieser Anordnung wurden Säulen verschiedener Volumina mit unterschiedlichen Materialien gefüllt. Versuche wurden mit den nachstehenden stationären Phasen durchgeführt:

| Material | Korngröße (µm) |
|---|---|
| Kieselgel | 12 – 21 |
| | 20 – 45 |
| | 35 – 70 |
| | 40 – 60 |
| Reversed Phase Kieselgel | 12 – 21 |
| (hydrophobiert) | 20 – 45 |
| | 35 – 70 |
| | 40 – 60 |
| Aluminiumoxid | 15 – 25 |

Die Füllgeschwindigkeit betrug 800 ml/h, die Rotationsgeschwindigkeit der Säule wurde zwischen 4 und 20 U/Min, die Hubfrequenz zwischen 80 und 120 je Minute variiert. Der Säuleninhalt betrug 400 ml bei einem Säulendurchmesser von 37 mm. Es wurden stets reproduzierbare Füllungen mit den gewünschten Eigenschaften erhalten.

## Ansprüche

1) Verfahren zum Befüllen von Chromatographiesäulen, wobei einzufüllendes Material aus einem Vorratsbehälter kopfseitig in die senkrecht stehende Säule eingetragen wird, dadurch gekennzeichnet, daß man das Material trocken mit Hilfe einer vertikal angeordneten Schnecke aus dem Vorratsbehälter in die Säule einbringt und diese rotiert, das einzufüllende Material im Vorratsbehälter durch Zufuhr von Luft oder einem Inertgas aufwirbelt, sowohl den Behälter als auch die Säule entlüftet und die Säule in kurzen Zeitabständen durch Auf-und Abbewegung auf einen unteren Anschlag stößt, wobei der Vorratsbehälter und die Schnecke ortsfest verbleiben.

2) Verfahren nach Anspruch 1 dadurch gekennzeichnet, daß das Material von der Schnecke zunächst in einen Trichter gefördert wird, aus dem es in die Säule gelangt und daß Abluft seitlich der Trichterwandung nach außen geführt wird.

3) Verfahren nach Anspruch 1 oder 2 dadurch gekennzeichnet, daß die Säule mit einer Frequenz von $\Upsilon$ = 80 bis 200/Min gestoßen wird, wobei die Hubhöhe 0,5 bis 5,0, vorzugsweise etwa 2 cm beträgt.

4) Verfahren nach mindestens einem der Ansprüche 1 - 3 dadurch gekennzeichnet, daß die Rotationsgeschwindigkeit der Säule 4 bis 20 Umdrehungen pro Minute beträgt.

5) Verfahren nach mindestens einem der Ansprüche 1 - 4 dadurch gekennzeichnet, daß die Luft oder das Inertgas dem Vorratsgefäß über Düsen lediglich bei der Aufwärtsbewegung der Säule zugeführt wird.

6) Verfahren nach mindestens einem der Ansprüche 1 - 5 dadurch gekennzeichnet, daß die Korngröße des Materials kleiner gleich 45 µm, vorzugsweise kleiner 20 µm ist.

7) Vorrichtung zum Befüllen von Chromatographiesäulen, bestehend aus einer Halterung für die Säule und einem oberhalb der Säule angeordneten Vorratsbehälter dadurch gekennzeichnet, daß
-die Säule (1) am Vorratsbehälter (2) vertikal verschieblich und drehbar gelagert ist (3),
- daß der Vorratsbehälter (2) Düsen (4) für die Zufuhr von Luft oder Inertgas aufweist und mit Entgasungsöffnungen (21) versehen ist

- daß im Vorratsbehälter (2) eine in dessen Ausgang (5) hineinreichende motorisch getriebene vertikale Förderschnecke (6) angeordnet ist,
- wobei der Ausgang entlüftbar (7) mit dem Säulenoberteil (8) verbunden ist,
- daß der Vorratsbehälter (2) und die Schnecke (6) ortsfest an einem Stativ (9) angeordnet
- und daß die Säule (1) mit einem Antrieb (10) für deren Rotation und eine überlagerte intermittierende Hubbewegung verbunden und mit einem Stoßlager (11) versehen ist.

8) Vorrichtung nach Anspruch 7 dadurch gekennzeichnet, daß der Vorratsbehälter (2) in einen Einfülltrichter (12) mündet, der mit dem Säulenoberteil (1) fest verbunden ist und seitliche Entlüftungsöffnungen (7) aufweist, wobei der Einfülltrichter (12) verschieblich und drehbar am Vorratsbehälter (2) gelagert ist.

9) Vorrichtung nach Anspruch 6 oder 7 dadurch gekennzeichnet, daß die Säule (1) mit Hilfe einer Tragkonstruktion (13, 14) an Schienen (15, 16) verschieblich gelagert ist.

10) Vorrichtung nach mindestens einem der Ansprüche 7 - 9 dadurch gekennzeichnet, daß die Säule (1) koaxial auf einer Zahnscheibe (17) befestigt ist, die über eine bewegliche Welle (18) und eine Schnecke (19) von einem Motor (10) in Drehung versetzt wird und gleichzeitig über einen Exzentertrieb (20) auf-und abbewegbar ist.

11) Vorrichtung nach mindestens einem der Ansprüche 7 - 10 dadurch gekennzeichnet, daß das Stoßlager (11) aus einem Kunststoffblock besteht, auf den ein Stößel (32) punktförmig einwirkt und daß die gesamte Vorrichtung zum Beispiel mit Hilfe einer Moosgummiunterlage resonanzgedämpft ist.

12) Vorrichtung nach mindestens einem der Ansprüche 7 - 11 dadurch gekennzeichnet, daß die Düsen (4) des Vorratsgefäßes (2) mit der Hubbewegung des Motors synchron ansteuerbar sind.

Fig 1

Fig 2